(19) Europäisches Patentamt
European Patent Office
Office européen des brevets

(11) Publication number: 0 179 171 B1

(12) # EUROPEAN PATENT SPECIFICATION

(45) Date of publication of patent specification: **27.09.89**

(51) Int. Cl.$^4$: **B 29 C 51/02,** B 29 C 43/16, B 29 C 43/52

(21) Application number: **84306951.9**

(22) Date of filing: **11.10.84**

(54) **Improved method of forming blanks for the solid-phase forming of thermoplastic articles.**

(43) Date of publication of application:
**30.04.86 Bulletin 86/18**

(45) Publication of the grant of the patent:
**27.09.89 Bulletin 89/39**

(84) Designated Contracting States:
**BE CH DE FR GB IT LI NL SE**

(58) References cited:
**EP-A-0 033 862**
**FR-A-1 248 105**
**US-A-2 695 425**
**US-A-3 134 830**
**US-A-4 014 965**
**US-A-4 161 502**
**US-A-4 323 531**

(73) Proprietor: **THE DOW CHEMICAL COMPANY**
**2030 Dow Center Abbott Road P.O. Box 1967**
**Midland Michigan 48640-1967 (US)**

(72) Inventor: **Cleereman, Kenneth J.**
**9987 Cheroke Circle P.O. Box 435**
**Salida Colorado 81201 (US)**
Inventor: **Raspor, O. Carl**
**6271 Fox Glen Dr. Apt. 343**
**Saginaw Michigan 48603 (US)**
Inventor: **Burmester, Alan F.**
**310 W. Nelson**
**Midland Michigan 48640 (US)**

(74) Representative: **Allard, Susan Joyce et al**
**BOULT, WADE & TENNANT 27 Furnival Street**
**London EC4A 1PQ (GB)**

**EP 0 179 171 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to an improved method for the solid-phase forming of thermoplastic articles.

U.S. Patent No. 4,323,531 discloses the formation of thermoplastic articles from a polymeric resinous powder which is compressed into a briquette, sintered and then forged and, if desired, formed into an article. The process is essentially scrap-free, and the need to go through a melt-forming stage is avoided. While the aforesaid process can readily form satisfactory products from most thermoplastic resinous powders, difficulties in doing so at acceptable production speeds with some resinous powders and for large parts can be experienced. The present invention improves the process so that forging of blanks (from briquettes) into preforms which have essentially no voids, cracks or defects and have the prerequisite toughness can be accomplished with satisfactory rapidity even with large parts.

We have now developed an improved essentially scrapless process in which the steps of the operation of forming are simplified. In the process of the invention, thermoplastic resinous powders are formed at production speeds directly into products of high quality even where the resinous powders are basically difficult to form.

More particularly, the present invention comprises a process for forming thermoplastic resinous powders directly into products at production speeds without requiring processing through a complete melt stage. One particular advantage of the process of the invention is that large parts can be readily manufactured. The steps of the process include the formation of a briquette from a sufficient quantity of thermoplastic polymeric resinous powder for making the desired article by compressing the powder into a briquette, sintering the briquette for a time and temperature to accomplish more than about 20 percent melting but less than about 90 percent melting of the crystallinity of the original resinous powder, recompressing the briquette in a warm and, preferably, vented repress tool to form a blank and then forging the blank into a preform which is then thermoformable by standard thermoforming techniques into a finished article, unless the resulting preform is already in the configuration of the final article desired. The percent melting in the sintering step should be from 20 to 90 percent while the preferred range of melting in sintering step can be from 40 to 80 percent. The powder which is formed into briquettes can be at room temperature or can be preheated where it is determined that such will accelerate the total processing operation. In one alternate method of the invention, sintering can take place after recompressing, with preheating of the briquette prior to the recompressing step.

The invention particularly resides in a process for forming an article from a resinous material powder, wherein a quantity of the powder sufficient for making the article is compressed into a briquette having green strength, comprising the steps of

(a) preheating the briquette so that the temperature in the center of the briquette is below the melt temperature of the powder forming the briquette,

(b) repressing the briquette while at about the same temperature as in step (a) to form a blank, said repressing step being carried out without any significant plasticizing of the briquette and without altering the basic shape of the briquette;

(c) applying heat to the blank so that the center thereof is at a temperature higher than that of step (a) but still less than the melt temperature,

(d) maintaining the higher temperature for a period sufficient to soften and sinter the blank short of complete melting of the powder; and

(e) forging the blank into the article while the blank is at a temperature higher than that of step (a) but still below the melt temperature to effect substantial flow deformation of the blank and obtain substantial fusion of the powder forming said blank.

The invention additionally resides in a process for forming an article from a resinous material powder, wherein a quantity of the powder sufficient for making the article is compressed into a briquette having green strength, comprising the steps of

(a) heating the briquette to a temperature in the range of from above room temperature to below the melt temperature of the resinuous material and maintaining the temperature for a period sufficient to soften and sinter the briquette;

(b) repressing the briquette at a temperature within the same range as in step (a) to form a blank, said repressing step being carried out without ~'tering the basic shape of the briquette;

(c) forging the blank into the article while the blank is at a temperature within the same range as in step (a) to effect substantial plug flow deformation of the blank and obtain substantial fusion of the resinous material powder forming the blank.

Figure 1 is a diagramatic representation of the steps of the prior invention over which this present invention is an improvement. The steps are designated A to E, wherein a powder of a resinous material is formed into a preform and then into a container.

Figure 2 is a similar diagrammatic representation of the steps of the present invention designated as AA to GG, wherein a powder of a resinous material is formed into a preform and subsequently into a container as in Step E of Figure 1, if desired.

Figure 3 is a similar diagrammatic representation of the steps of a modified process of this invention herein designated as steps AAA to FFF. Here again, subsequent thermoforming into containers can also be achieved as in Step E of Figure 1, if desired.

Figures 4 to 6 illustrate various mechanical properties of the products made by this invention as influenced by the sintering step.

The following terms used in this application have the following meaning:

"Sintering" is the process by which an assembly of particles, compacted under pressure, physically and/or chemically bond themselves across contacting particle interfaces or boundaries into a coherent body under the influence of elevated temperature for a period of time, without complete melting generally occurring.

"Forging" is the process whereby resin particles are fused into a preform or article which has generally the same density and generally the same or improved mechanical properties that it would have if made by conventional melt forming processes.

"Plug flow" is the condition in which a blank deforms in an essentially multi-axial stretching mode such that the velocity gradient through the thickness of the material is relatively constant. This is in contrast to the usual parabolic flow pattern observed in conventional molding of polymers in a viscous state where the velocity varies from zero at the mold surface to a maximum near the mold center. Plug flow is the condition where the relative constant velocity through the thickness of the material is achieved by reducing the frictional drag at the mold surface. This can be conveniently accomplished by placing a lubricant between the blank and the contacting metal surfaces since few presently known resins are sufficiently self-lubricating for this purpose.

"Green strength" means having a compactness and adhesion of resinous powder in the briquette sufficient to enable the powder to be moved as a unit without support.

"Crystallinity" means the extent to which the material in a given sample is arranged in generally regular, periodic arrays, commonly known as crystals. Determinations of crystallinity are usually made by measurement of sample density, heat absorbed on melting, or intensity of discrete x-ray diffraction patterns.

"Degree of melting" means the percentage of the original crystallinity in a crystalline thermoplastic material which is melted during a heat treating step. For example, an unheated specimen will have a degree of melting equal to zero percent while a completely melted specimen will have a degree of melting equal to 100 percent.

"Repressing" or "recompressing" means a recompaction of the resinous material powder without significant deformation of the original briquette which was initially compacted into a briquette. The material of the briquette, while warm, is further densified during such recompaction to form a blank.

"Melting point" or "peak melt temperature" ($T_p$) means that temperature indicated by the maximum in the melting endothermic peak as seen in the customary differential scanning calorimeter (DSC) measurement.

"Alpha transition temperature" ($T\alpha$) for amorphous polymers is considered to be the glass transition. In the case of crystalline polymers it is, taken as an energy loss peak associated with the crystalline region often observed at a temperature of from 50°C to 100°C below the melting point of the polymer.

"Preheating" means heating a briquette at a temperature below $T_p$, preferably such that little or no melting of the crystal structure of the resinous material powder occurs.

Figure 1 is a schematic depictation of a solid phase process for forming preforms directly from a resinous material powder 10 as described in detail in U.S. Patent No. 4,323,531. For purposes of this description, such process is identified as Method I. Briefly, a quantity of a resinous material powder 10 sufficient to make a finished product is measured at Step A and is thereafter compressed in Step B into a briquette 12. The briquette is heated in Step C to a temperature in the range from about the alpha transition temperature to less than the melt temperature thereof and is thereafter maintained at that temperature for a period of time sufficient to soften the briquette and sinter the same short of substantial fusion thereof to form a blank. The blank 12 is then forged in Step D between platens 16 into a preform 18 (or a final product where the preform can take the shape of the finished article desired). While the blank is forged, it is at a temperature within the above stated temperature range to affect substantial plug flow deformation of the blank and obtain substantial fusion of the powder comprising the blank to form the preform or final product. If formed as a preform, the preform 18 can be transferred to a thermoforming die 22 and can then be formed into a container 20 or other product by conventional thermoforming techniques as illustrated at Step E.

While Method I works well for some resinous material powders, it has been found to have some limitations in forming products from certain resinous powders. Some powders are difficult to compact into a briquette. Some develop voids during forging. Long heating times are required because of resin expansion before densification of the resin particles. The process of Method I can sometimes be slower than desired for production applications. The processes of the present invention, hereafter described, have been able to accomplish the formability of such difficult-to-handle thermoplastic materials and especially large parts while at the same time speeding up the forming process.

One embodiment of the process of the present invention is Method II, illustrated in Figure 2. In this method an amount of resinous powder 24, sufficient to form a desired article, is provided at Step AA. The powder is at room temperature and is compacted at Step BB into a briquette 26 having green strength.

Compaction pressures and compaction dwell times are basically the same as those used in the prior art; i.e., Method I of Figure 1. The briquette 26 is then placed into an, environment for heating, such as a circulating air oven or an infra-red oven or a radio frequency heater, where it is preheated at Step CC. When the temperature at the the center of the briquette 26 reaches a temperature which is preferably from 15 to 35 degrees below $T_p$, the preheated briquette is removed from the oven and repressed in Step DD at a temperature above room temperature in a repress tool to form a blank. Obviously, the repress tool can also be at about the same temperature as the briquette itself. Venting or evacuation can be used during either the compaction or repressing steps.

Immediately after repressing, the hot blank 26 obtained at Step DD,is either cooled at Step EE for further processing at a later time or can be taken directly to another oven, for example, like that used in Step CC. Here, however, the blank 26 is kept in the oven until it has reached a degree of melting of the resinous material in the blank of from 20 to 90 percent. Normally, this will put the center of the blank at a temperature no greater than 1 or 2 degrees below $T_p$, and no significant melt flow is occurring. The sintered blank is then be forged (solid phase formed) at Step GG into a preform or article 28. A traditional thermoforming step can be added if preform 28 is not in the shape of the finished article at Step GG. For example, for typical high molecular weight high density polyethylene, the repress tool can be heated to a temperature of from 100 to 135°C. Repress pressures are customarily between 210 to 700 kg/cm$^2$ with a dwell period of about 5 seconds. Repress tool temperatures are not critical provided the blank is not chilled before the repressing occurs. High repress tool temperatures, while possible, may be undesirable since the blank could stick to the repress tool and would thus be hard to remove. However, lubrication of the tool surfaces with a lubricant such as a silicone coating can significantly eliminate sticking.

A major difference between Method II of this invention and Method I of Figure 1, is that the briquette before sintering is preheated and repressed in a warm tool. The reason that repressing is not done at a melt phase temperature is so that no significant plasticizing occurs at the repressing step in this solid-phase forming process. Thus, the basic shape of the briquette is not changed during the repress operation. The repressing step serves to densify the briquette (to form the blank in a way that helps minimize voids, cracks or defects which might otherwise occur. This results in a blank requiring a shorter sinter time.

Larger briquettes made by the above method still tended to crack occasionally and the extra preheat time and additional heating equipment still is somewhat of a disadvantage in the manufacturing operation of large blanks. A modified process of this invention which is more rapid and can produce satisfactory large as well as small blanks, is illustrated in Method III of Figure 3. Here, a resinous material powder 30 sufficient to make an article is provided in Step AAA and compressed in Step BBB into a briquette 32 as in Method II described before. However, the sintering Step CCC occurs before the repressing Step DDD instead of afterwards, thereby eliminating at least one step in the process. The repressing and sintering steps can be done under substantially the same conditions as in Method II, but only in a reverse order. An optional cooling Step EEE can be included should it be desired to forge the repressed blank 32 into a preform in Step FFF at a later date. Otherwise, the blank 32 from Step DDD is directly transferred to the forging apparatus of Step FFF for forging an article or preform. Subsequent thermoforming of the preform into a container can be achieved as illustrated in Step E of Method I, if desired.

Example

Using Method III (Figure 3) of this invention, 50 and 100 gram portions of a high density polyethylene (HDPE) in powder form were compression formed into briquettes having a diameter of 6.35 cm. The briquettes were heated and sintered (Step CCC) in a circulating air oven at a temperature of from 133 to 137°C. The samples (shown in Table 1 below) were then repressed (at Step DDD) at a temperature of 130°C in a repress tool with a vacuum applied before and during the repress step. The cycle was conducted for 15 seconds in a vacuum and for 15 seconds of repressing at a pressure of 700 kg/cm$^2$. The 50 gram briquettes were heated and sintered for 80 minutes and the 100 gram briquettes for 120 minutes. After repressing, hot blanks formed from the briquettes were hand carried and placed in a 19.7 cm diameter forging tool and forged into a preform. The conditions and results are summarized in the following Table 1.

TABLE 1
Appearance of Preforms Forged by Method III

| Sinter Temperature | 50 gm Sample 80 Minute Sinter Time | 100 gm Sample 120 Minute Sinter Time |
|---|---|---|
| 133°C | 1 | I |
| 135°C | 2 | II |
| 137°C | 2 | III |

Footnotes to table

1 — Some small voids, complete lip.
I — Some small voids, incomplete lip.
2 or II — No voids, complete lip, excellent preform.
III — No voids, complete lip, overheated blank.
Conditions: Material — HDPE
Repress tool temperature — 130°C
Forging platen temperature — 130°C
Forging Force — 91 metric tons
Forging Dwell time — 1 second

For this particular material and forging tool, a temperature of 135°C appeared to be the ideal oven temperature for sintering. Additional 150 gram forged preforms made at a temperature of 135°C had full well-defined lips, glossy surfaces, no thin spots and no voids. While lower repress die temperatures were not used in this run with high speed equipment and integrated tooling, it is expected that lower repress die temperatures would eliminate any sticking without chilling of the surface of the blank.

A series of additional tests were made with similar results. There seemed to be little difference between the 100 gram and the 50 gram blanks. Repressing the heated briquette in a warm repressing tool under vacuum increased the density about 18%. When cooled, the repressed sample looked like a compression molding. It was firm, had glossy surfaces, had a convexed top and bottom surfaces and concave vertical surfaces. When these blanks were forged into preforms immediately after repressing, excellent preforms were obtained. The forged preforms were then formed into parts without difficulty. The parts were generally uniform in cross-sections and were free of voids. When a repressed blank was allowed to cool to room temperature and then reheated in an oven for a sufficient period of time, forged and formed, the resulting part had white blemishes. However, these blemishes did not have the appearance of voids in the center. The cause of the difference is unknown.

It has been found that the quality of the forged preform improves as the compaction pressure used to make the preforms was increased from 70 to about 350 kg/cm$^2$. Above this pressure, little differences were found in processing times, although compaction pressures up to about 1750 kg/cm$^2$ can make briquettes stronger and more abrasion resistant.

It is desirable to keep the heating times to a minimum in production operations. The use of radio frequency (RF) to heat the interior of a sample and circulating air oven to heat the exterior surfaces has been employed with considerable success. It is also possible to decrease the heating time by using thin blanks which are heated individually in a circulating air oven and then stacked upon one another to form a full weight blank. The only problem is that once the hot thin blanks come into contact with one another, they tend to stick so that proper alignment must be maintained.

In the present invention hot briquettes are repressed into blanks without shaping and excellent void-free forged preforms can be made from the blanks which can then be formed into high quality preforms or articles. If preforms are made they can thereafter be thermoformed into containers and other articles by conventional thermoforming techniques.

The high density polyethylene resin which is used in the practice of this invention is a fine, fluffy, low bulk density powder. It has been found to be formable with some difficulty, but is still quite operable and practical. Other high-density polyethylene powders, including ultra-high molecular weight powders have been evaluated and have been found to be satisfactory. When compacting such powders into a briquette, heating and repressing it into a blank according to the present invention, a defect-free part can be satisfactorily forged and formed. This resin used in the specific examples can be compacted into a briquette using a cold compaction die and no vacuum. However, better results are often obtained when a warmer compaction die and some vacuum is used.

Some comparative tests were run of Methods I, II and III using a somewhat different resinous powder. Forty gram portions of ultra high molecular weight polyethylene (UHMW) powder were compacted into briquettes which were about 6.35 cm in diameter and about 2.54 cm high. The conditions were as follows:

Method I

A. The briquettes were sintered by placing them in a convection oven set at a peak melting temperature (143°C) for 120 minutes.

Method II

A. The briquettes were preheated by placing them in a convection oven at a temperature of 110°C for 60 minutes (about $T_p$−33°C).

B. The briquettes were then repressed at a pressure of 700 kg/cm$^2$ for 15 seconds in a compression tool at a temperature of 136°C to form blanks.

C. The blanks were then cooled to room temperature.

D. The blanks sintering were as in Method IA, above.

Method III

A. The briquettes were sintered as in Method IA, above.

B. The briquettes were then repressed at a pressure of 700 kg/cm$^2$, for 15 seconds in a compression tool at a temperature of 136°C to form blank.

Upon completion of each of the above Methods, the blanks were forged into 19.l cm diameter disc shaped parts between flat platens at a temperature of 136°C by application of a pressure of 315 kg/cm$^2$. Tensile test specimens were then cut from these disc shaped parts and tested according to standard ASTM method D-638. The results are presented below:

| Method | Elongation (%) | Strength (kg/cm$^2$) | Modulus (kg/cm$^2$) |
|---|---|---|---|
| I | 95 | 658 | 14,350 |
| II | 120 | 917 | 17,850 |
| III | 100 | 1008 | 16,100 |

Tests of the three methods were also run at different heating cycles some of which produced unsatisfactory forgings because heating times were too short, or because heating times were too long to melt the parts. The above test was selected to typify comparative results where satisfactory forgings for all three methods were obtained. What it shows is that both Methods II and III resulted generally in forgings with better properties than those made by Method I with this particular material. Method II was found to yield somewhat better properties generally than Method III, but Method III still yielded blanks having excellent properties and had the advantage of being less complex than Method II.

The effect of the degree of melting during sintering on the mechanical properties of a preform during solid-phase forming has been found to be significant. The process of sintering is a progressive one in which three stages may be identified. During the initial stage, the entire briquette is being heated to within a few degrees of $T_p$ or the melting range.

Blanks forged after sintering to this stage commonly produce grossly defective preforms in that they tend to not fill the mold, have very low values of ultimate extension and are generally quite cloudy due to incomplete fusion of the particles. In the second stage, when the degree of melting approaches about 20 percent, the particles at the exterior surface of the briquette become completely molten and begin conducting significantly more heat to the interior. Forgings produced from blanks at this second stage are normally well-formed and have consistent physical properties. It has been discovered that if the sintering process is allowed to proceed to a third stage wherein one exceeds about 80 percent and approaches about 90 percent or so of the original crystallinity being melted, the physical properties normally change rapidly with further sintering. Ultimate elongation (Figure 6) is increased significantly while modulus (Figure 5) can be decreased by as much as 30 percent. The reasons for these dramatic changes in the final stage of sintering is not clear but may be related to a complete loss of the crystal morphology originally present in the resinous material powder. The effects of degree of melting during sintering on tensile strength, for example, are illustrated in Figure 4. A preform, such as a preform 18, 28 or 34 of Figures 1 to 3, respectively, would have its tensile strength measured after forging where the degree of melting at the conclusion of the sintering step would be measured with the results shown in Figure 4. It was discovered that the maximum tensile strength was reached when the degree of melting of the crystals in the samples was between 20 and 90 percent.

The tensile modulus of these same samples was also measured during the sintering process. From Figure 5 it is evident that the modulus remained high until the degree of melting approached about 90 percent.

The tensile elongation of the samples was also measured and again it was found that a satisfactory level of elongation was achieved when the degree of melting approached about 20 percent until it approached about 90 percent, as evident from Figure 6.

Balancing the most desirable tensile strength, tensile modulus and tensile elongation mechanical properties it is evident that the physical parameters are subject to rather little change and are in a satisfactory range at melting levels from 20 to 90 percent. When the degree of melting is in excess of about 90 percent, all three physical parameters were found to change dramatically. For example, between 90 and 100 percent, the ultimate elongation increased by a factor of 2 while the strength decreased by a factor of nearly 1/2. These observations have led to the conclusion that optimal sintering conditions for briquettes of a nature similar to that of high density polyethylene in Method I as well as in Methods II and III of this present invention are such that the degree of melting is between 20 and 90 percent. To insure maximum advantages of the processes of this invention, it is preferable to sinter where the degree of melting achieved is from 40 to 80 percent. When a forced air convection oven is used for heating, the oven temperatures can be set to about 3 degrees Centigrade above $T_p$ for faster heating cycles without hindering the process, but residence times for the preforms should not be such that $T_p$ is reached at the center of the briquette.

With the present invention numerous materials heretofore not readily formable can be formed in a solid-phase system directly from many crystalline and perhaps some amorphous resinous material powders into thermoplastic preforms and articles.

**Claims**

1. A process for forming an article from a resinous material powder, wherein a quantity of the powder sufficient for making the article is compressed into a briquette having green strength, comprising the steps of

(a) preheating the briquette so that the temperature in the center of the briquette is below the melt temperature of the powder forming the briquette,

(b) repressing the briquette while at about the same temperature as in step (a) to form a blank, said repressing step being carried out without any significant plasticizing of the briquette and without altering the basic shape of the briquette;

(c) applying heat to the blank so that the center thereof is at a temperature higher than that of step (a) but still less than the melt temperature,

(d) maintaining the higher temperature for a period sufficient to soften and sinter the blank short of complete melting of the powder; and

(e) forging the blank into the article while the blank is at a temperature higher than that of step (a) but still below the melt temperature to effect substantial flow deformation of the blank and obtain substantial fusion of the powder forming said blank.

2. A process as claimed in claim 1 wherein the preheating temperature at the center of the briquette is from 15 to 35 degrees below the melt temperature of the resinous material powder.

3. A process as claimed in claim 1 or claim 2 wherein the degree of melting which occurs during sintering step (d) is from 20 to 90 percent.

4. A process as claimed in any one of the preceding claims wherein the repressing step (b) is conducted at a pressure of greater than 70 $kg/cm^2$.

5. A process for forming an article from a resinous material powder, wherein a quantity of the powder sufficient for making the article is compressed into a briquette having green strength, comprising the steps of

(a) heating the briquette to a temperature in the range of from above room temperature to below the melt temperature of the resinuous material and maintaining the temperature for a period sufficient to soften and sinter the briquette;

(b) repressing the briquette at a temperature within the same range as in step (a) to form a blank, said repressing step being carried out without altering the basic shape of the briquette;

(c) forging the blank into the article while the blank is at a temperature within the same range as in step (a) to effect substantial plug flow deformation of the blank and obtain substantial fusion of the resinous material powder forming the blank.

6. A process as claimed in claim 5, wherein the degree of melting which occurs during the sintering step (a) is from 20 to 90 percent.

7. A process as claimed in claim 5 or claim 6 wherein the repressing step is conducted at a pressure of greater than 70 $kg/cm^2$.

8. A process as claimed in any one of the preceding claims wherein after the repressing step (b) the blank is optionally allowed to cool to room temperature before the next step of the process.

9. A process as claimed in claim 3 or claim 6 wherein the degree of melting is from 40 to 80 percent.

10. A process of any one of the preceding claims wherein heating is provided by radio frequency means for faster cycle times.

**Patentansprüche**

1. Verfahren zur Herstellung eines Gegenstandes aus einem Harzmaterialpulver, worin eine Menge des Pulvers die ausreicht, den Gegenstand herzustellen, zu einem Brikett mit Grünfestigkeit komprimiert wird, umfassend die Schritte

(a) Vorheizen des Briketts, so daß die Temperatur in der Mitte des Briketts unterhalb der Schmelztemperatur des Pulvers liegt, das das Brikett bildet,

(b) erneut Pressen des Briketts, während es ungefähr dieselbe Temperatur wie in Schritt (a) hat, um ein Formteil zu bilden, wobei der erneute Preßschritt ausgeführt wird, ohne jegliches signifikantes Plastifizieren des Briketts und ohne Veränderung der Grundform des Briketts;

(c) Anwenden von Hitze an das Formteil, so daß die Mitte davon eine Temperatur hat, die höher ist als die von Schritt (a), jedoch noch geringer als die Schmelztemperatur,

(d) Aufrechterhalten der höheren Temperatur einen ausreichenden Zeitraum lang, um das Formteil zu erweichen und zu sintern kurz vor dem vollständigen Schmelzen des Pulvers; und

(e) Schmieden des Formteils zu einem Gegenstand, während das Formteil eine höhere Temperatur hat als die von Schritt (a), jedoch noch unterhalb der Schmelztemperatur, um wesentliche Flußdeformation des Formteils zu bewirken und eine wesentliche Fusion des Pulvers, das das Formteil bildet, zu erhalten.

2. Verfahren nach Anspruch 1, worin die Vorheiztemperatur in der Mitte des Briketts zwischen 15 und 35° unterhalb der Schmelztemperatur des Harzmaterialpulvers liegt.

3. Verfahren nach Anspruch 1 oder 2, worin der Grad des Schmelzens, der während des Sinterns in Schritt (d) stattfindet, zwischen 20 und 90% liegt.

4. Verfahren nach einem der vorhergehenden Ansprüche, worin der erneute Preßschritt (b) bei einem Druck von mehr als 70 $kg/cm^2$ durchgeführt wird.

5. Verfahren zur Formung eines Gegenstandes aus einem Harzmaterialpulver, worin eine Menge des Pulvers, die ausreicht, um den Gegenstand herzustellen, zu einem Brikett mit Grünfestigkeit komprimiert wird, umfassend die Schritte

(a) Erhitzen des Briketts auf eine Temperatur im Bereich von oberhalb Raumtemperatur bis unterhalb der Schmelztemperatur des Harzmaterials und Aufrechterhalten der Temperatur ausreichend lange, um das Brikett zu erweichen und zu sintern;

(b) erneutes Pressen des Briketts bei einer Temperatur innerhalb desselben Bereichs wie in Schritt (a), um ein Formteil zu bilden, wobei der erneute Preßschritt ausgeführt wird, ohne die Grundform des Briketts zu ändern;

(c) Schmieden des Formteils zu einem Gegenstand, während das Formteil eine Temperatur innerhalb desselben Bereichs wie in Schritt (a) hat, um wesentliche Kernflußdeformation des Formteils zu bewirken und eine wesentliche Fusion des Harzmaterialpulvers, das das Formteil bildet, zu erhalten.

6. Verfahren nach Anspruch 5, worin der Grad des Schmelzens, der während des Sinterschritts (a) auftritt, zwischen 20 und 90% liegt.

7. Verfahren nach Anspruch 5 oder 6, worin der erneute Preßschritt bei einem Druck von mehr als 70 $kg/cm^2$ durchgeführt wird.

8. Verfahren nach einem der vorhergehenden Ansprüche, worin nach dem erneuten Preßschritt (b) das Formteil gegebenenfalls auf Raumtemperatur abkühlen gelassen wird vor dem nächsten Schritt des Verfahrens.

9. Verfahren nach Anspruch 3 oder 6, worin der Grad des Schmelzens zwischen 40 und 80% liegt.

10. Verfahren nach einem der vorhergehenden Ansprüche, worin das Erhitzen mit Hilfe von Radiofrequenz für schnellere Zykluszeiten bereitgestellt wird.

**Revendications**

1. Procédé pour former un article à partir d'une poudre de matériau résineux, dans lequel on comprime une quantité de poudre, suffisante pour fabriquer l'article, pour en faire une briquette présentant une résistance avant traitement, comportant les étapes consistant à

(a) préchauffer la briquette de façon que la température au centre de la briquette soit inférieure à la température de fusion de la poudre formant la briquette,

(b) presser à nouveau la briquette pendant qu'elle est à peu près à la même température que dans l'étape (a) pour former une ébauche, ladite étape de pressage renouvelé étant effectuée sans plastification significative de la briquette et sans modification de la forme de base de la briquette;

(c) appliquer de la chaleur à l'ébauche de façon que son centre soit à une température supérieure à celle de l'étape (a), mais encore inférieure à la température de fusion,

(d) maintenir cette température supérieure pendant une période suffisante pour ramollir et fritter l'ébauche un peu avant fusion complète de la poudre; et

(e) forger l'ébauche pour en faire l'article pendant que l'ébauche se trouve à une température supérieure à celle de l'étape (a), mais encore inférieure à la température de fusion, pour que s'éffectue une déformation substantielle, par écoulement, de l'ébauche et pour obtenir une fusion substantielle de la poudre formant ladite ébauche.

2. Procédé selon la revendication 1, dans lequel la température de préchauffage au centre de la briquette est de 15 à 35 degrés en dessous de la température de fusion de la poudre de matériau résineux.

3. Procédé selon la revendication 1 ou la revendication 2, dans lequel le degré de fusion qui se produit au cours de l'étape de frittage (d) est de 20 à 90 pour cent.

4. Procédé selon l'une quelconque des revendications précédentes, dans lequel l'étape de pressage renouvelé (b) s'effectue sous une pression supérieure à 70 $kg/cm^2$.

5. Procédé pour former un article à partir d'une poudre de matériau résineux, dans lequel on comprime une quantité de poudre, suffisante pour fabriquer l'article, pour en faire une briquette présentant une résistance avant traitement, comportant les étapes consistant à

(a) chauffer la briquette à une température située sur la plage allant depuis au-dessus de la température ambiante jusqu'en dessous de la température de fusion du matériau résineux et maintenir la température pendant une période suffisante pour ramollir et fritter la briquette;

(b) presser à nouveau la briquette à une température située sur la même plage que dans l'étape (a) pour former une ébauche, ladite étape de pressage renouvelé s'effectuant sans modifier la forme de base de la briquette;

(c) forger l'ébauche pour en faire l'article pendant que l'ébauche se trouve à une température située sur la même plage que dans l'étape (a), pour que s'effectue une déformation substantielle, par écoulement à gradient relativement constant, de l'ébauche et pour obtenir une fusion substantielle de la poudre de matériau résineux formant l'ébauche.

6. Procédé selon la revendication 5, dans lequel le degré de fusion qui se produit au cours de l'étape de frittage (a) est de 20 à 90 pour cent.

7. Procédé selon la revendication 5 ou la revendication 6, dans lequel l'étape de pressage renouvelé s'éffectue sous une pression supérieure à 70 $kg/cm^2$.

8. Procédé selon l'une quelconque des revendications précédentes, dans lequel, après l'étape de pressage renouvelé (b) on laisse, en option, refroidir l'ébauche à la température ambiante avant l'étape suivante du procédé.

9. Procédé selon la revendication 3 ou 6, dans lequel le degré de fusion est de 40 à 80 pour cent.

10. Procédé selon l'une quelconque des revendications précédentes, dans lequel le chauffage s'éffectue par des moyens de radio-fréquence pour donner des temps de cycle plus rapides.

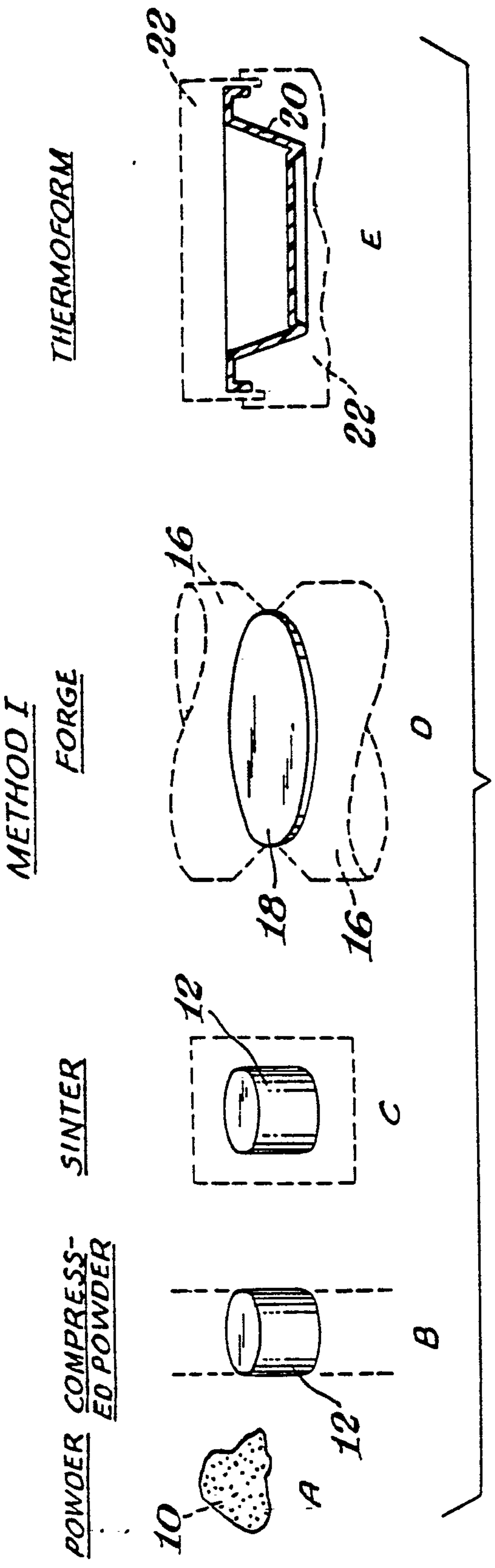
METHOD I
POWDER
COMPRESSED POWDER
SINTER
FORGE
THERMOFORM
A
B
C
D
E
10
12
16
18
20
22

FIG.1

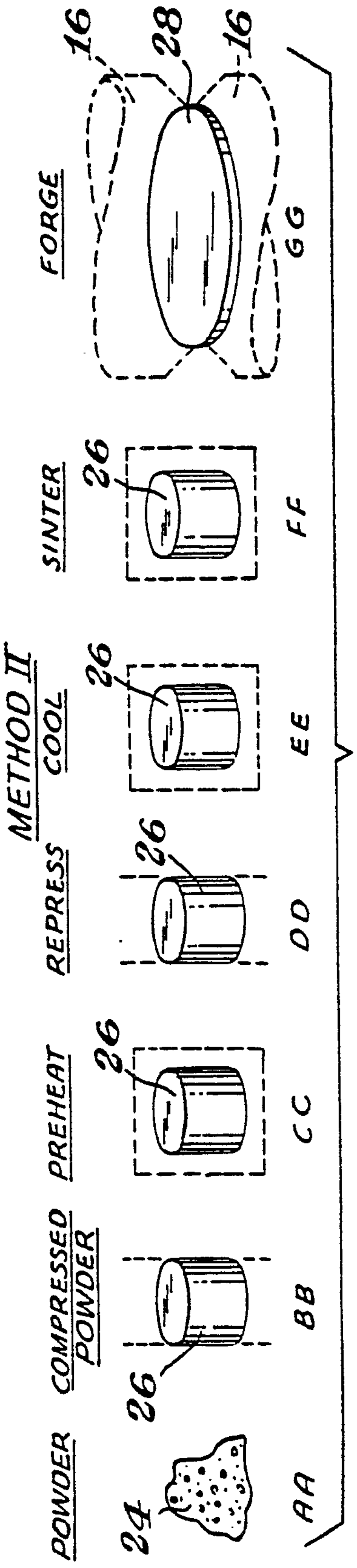
METHOD II
POWDER
COMPRESSED POWDER
PREHEAT
REPRESS
COOL
SINTER
FORGE
AA
BB
CC
DD
EE
FF
GG
24
26
28
16

FIG.2

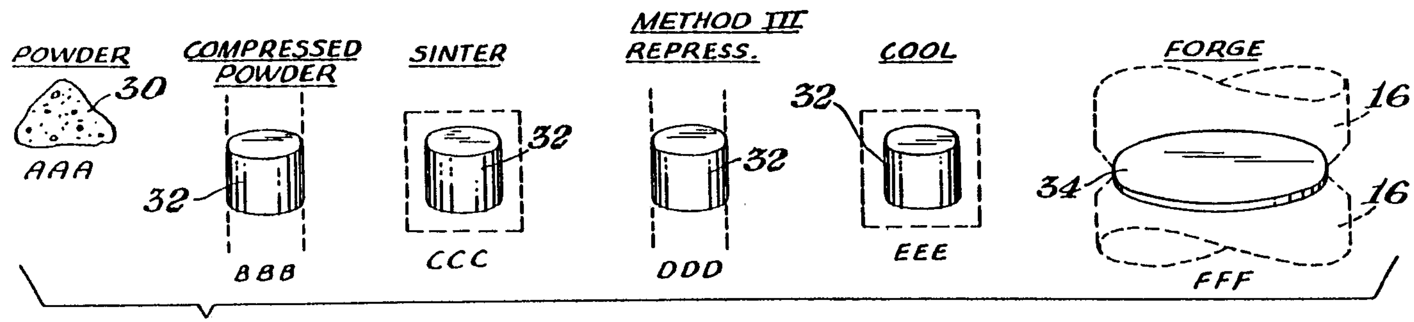
POWDER
30
AAA
COMPRESSED POWDER
32
BBB
SINTER
32
CCC
METHOD III
REPRESS.
32
DDD
COOL
32
EEE
FORGE
16
16
34
FFF

FIG.3

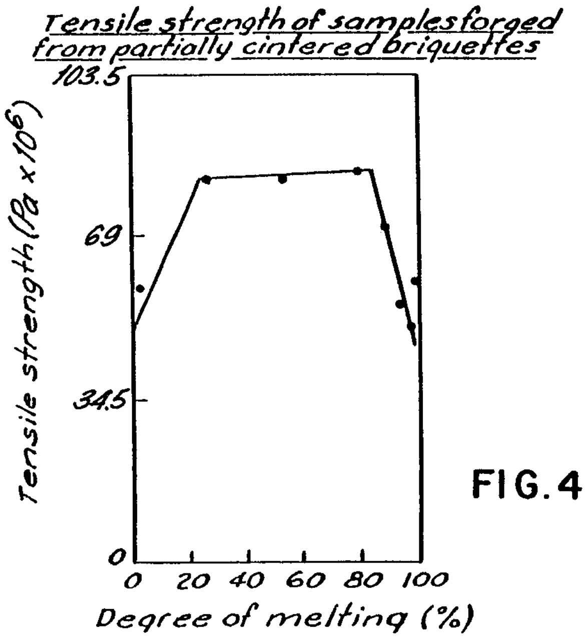
Tensile strength of samples forged from partially cintered briquettes
Tensile strength (Pa x 10⁶)
103.5
69
34.5
0
0 20 40 60 80 100
Degree of melting (%)

FIG.4

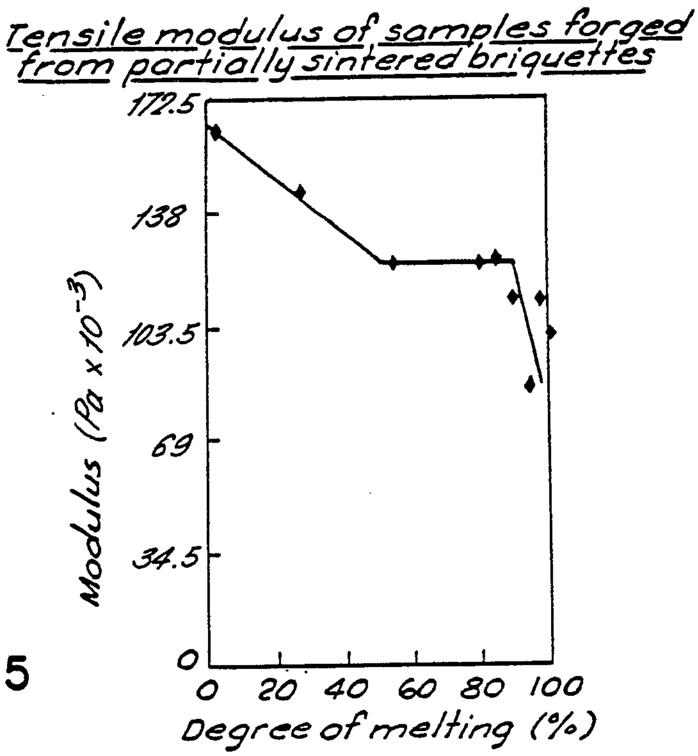
Tensile modulus of samples forged from partially sintered briquettes
172.5
138
103.5
69
34.5
0
Modulus (Pa x 10⁻³)
0 20 40 60 80 100
Degree of melting (%)

FIG. 5

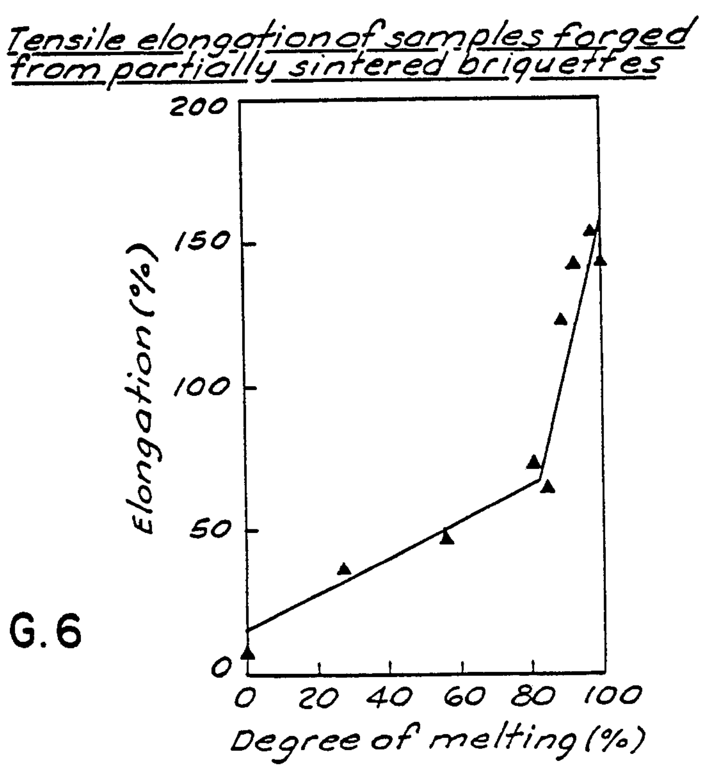
Tensile elongation of samples forged from partially sintered briquettes
200
150
100
50
0
Elongation (%)
0 20 40 60 80 100
Degree of melting (%)

FIG. 6